# EUROPÄISCHE PATENTANMELDUNG

(11) **EP 3 640 468 A1**
(43) Veröffentlichungstag der Anmeldung: **22.04.2020**
(21) Anmeldenummer: 19192488.5
(22) Anmeldetag: 20.08.2019
(51) Int. Cl.: F02M 35/10, F16L 11/26, F02M 35/12, F16L 55/04, F16L 11/12

(54) **FLUIDLEITUNG ZUM LEITEN EINES FLUIDS**

(30) Priorität: 19.09.2018 DE 102018122988
(71) Anmelder: VERITAS AG, 63571 Gelnhausen (DE)
(72) Erfinder: HATTASS, Dirk, 63584 Gruendau (DE); WEITZEL, Kai, 63589 Linsengericht (DE); STRAETER, Michael, 75181 Pforzheim (DE)
(74) Vertreter: Patentship Patentanwaltsgesellschaft mbH

(57) **Zusammenfassung**

Die vorliegende Erfindung betrifft eine Fluidleitung (100) zum Leiten eines Fluids, mit einem Kunststoffrohr (101) zum Leiten des Fluids; und einem Kunststoffgitter (103), das das Kunststoffrohr (101) umgibt und vorgesehen ist, eine Resonanzschwingung des Kunststoffrohrs (101) zu dämpfen. Das Kunststoffgitter (103) ist mit dem Kunststoffrohr (101) untrennbar verbunden.

## Beschreibung

Die vorliegende Erfindung betrifft eine Fluidleitung zum Leiten eines Fluids, insbesondere eine Fluidleitung in einem Fahrzeug zum Leiten eines Fluids.

In einem Fahrzeug wird eine Vielzahl von Fluidleitungen verwendet, um Gase oder Flüssigkeiten zu transportieren. Um einen Verbrennungsmotor eines Kraftfahrzeuges während des Betriebs mit Ladeluft zu versorgen, wird Ladeluft durch eine als Ladeluftleitung ausgebildete Fluidleitung geleitet. Derartige Ladeluftleitungen müssen mechanisch stabil sein, um den erhöhten Druck- und Temperaturbedingungen der geleiteten Ladeluft vorteilhaft widerstehen zu können. Herkömmliche aus Metallen gefertigte Ladeluftleitungen weisen oftmals ein hohes Eigengewicht auf. Herkömmliche aus Kunststoff gefertigte Ladeluftleitungen können eine nachteilige mechanische Stabilität aufweisen und/oder es können nachteilige Resonanzschwingungen auftreten.

Es ist die der Erfindung zugrundeliegende Aufgabe, eine mechanisch stabile Fluidleitung für ein Kraftfahrzeug bereitzustellen, welche ein geringes Eigengewicht aufweist und eine wirksame Dämpfung von Resonanzschwingungen sicherstellt.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Fluidleitung zum Leiten eines Fluids gelöst, mit einem Kunststoffrohr zum Leiten des Fluids; und einem Kunststoffgitter, das das Kunststoffrohr umgibt und vorgesehen ist, eine Resonanzschwingung des Kunststoffrohrs zu dämpfen, wobei das Kunststoffgitter mit dem Kunststoffrohr untrennbar verbunden ist.

Dadurch wird beispielsweise der technische Vorteil erreicht, dass die Verwendung eines Kunststoffrohrs im Vergleich zu einem herkömmlich verwendeten Metallrohr ein reduziertes Eigengewicht der Fluidleitung ermöglicht, und dass das das Kunststoffrohr umgebende Kunststoffgitter eine wirksame Dämpfung von Resonanzschwingungen des Kunststoffrohrs sicherstellt.

Durch die untrennbare Verbindung zwischen dem Kunststoffgitter und dem Kunststoffrohr kann zudem die Rohrdicke des Kunststoffrohrs vorteilhaft reduziert werden. Insbesondere weist das Kunststoffrohr eine Rohrdicke von weniger als 2,5 mm auf, insbesondere von weniger als 2,0 mm, insbesondere von weniger als 1,5 mm.

Insbesondere umgibt das Kunststoffgitter das Kunststoffrohr nur bereichsweise. Insbesondere weist das Kunststoffrohr Rohrbereiche auf, welche das Auftreten von Resonanzschwingungen des Kunststoffrohrs begünstigen, wobei das Kunststoffgitter insbesondere diese Rohrbereiche umgibt, um eine Resonanzschwingung des Kunststoffrohrs zu dämpfen. Die Rohrbereiche des Kunststoffrohrs, welche das Auftreten von Resonanzschwingungen des Kunststoffrohrs begünstigen, können beispielsweise mittels Berechnungen oder Computersimulation bestimmt werden, oder können durch Experimente an einem Kunststoffrohr ohne Kunststoffgitter ermittelt werden.

Insbesondere ist die Fluidleitung, insbesondere das Kunststoffrohr, ausgebildet, Fluid in einem Temperaturbereich zwischen 80°C und 250°C und/oder Fluid in einem Druckbereich zwischen 1 bar und 5 bar zu leiten.

Insbesondere ist die Fluidleitung als eine Ladeluftleitung eines Fahrzeugs geformt, wobei die Ladeluftleitung ausgebildet ist, Ladeluft, insbesondere Ladeluft mit Säuren, Kondensaten, und/oder Motoröl, in einem Fahrzeug zu leiten.

Insbesondere umfasst das Kunststoffrohr und das Kunststoffgitter denselben Kunststoff oder unterschiedliche Kunststoffe. Insbesondere umfasst das Kunststoffrohr und/oder das Kunststoffgitter ein Thermoplast, insbesondere Polyphenylensulfid (PPS) und/oder Polyamid (PA).

In einer vorteilhaften Ausführungsform sind das Kunststoffgitter und das Kunststoffrohr einstückig, insbesondere als ein Spritzgussbauteil, ausgebildet, oder ist das Kunststoffgitter mit dem Kunststoffrohr stoffschlüssig verbunden, insbesondere verschweißt.

Dadurch wird der technische Vorteil erreicht, dass eine einstückige Ausbildung von Kunststoffgitter und Kunststoffrohr, bzw. eine stoffschlüssige Verbindung zwischen Kunststoffgitter und Kunststoffrohr sicherstellt, dass sich die untrennbare Verbindung zwischen Kunststoffgitter und Kunststoffrohr nicht löst. Wenn die Fluidleitung in einer Spritzgussform hergestellt wird, kann das Kunststoffgitter und das Kunststoffrohr einstückig als ein Spritzgussbauteil vorteilhaft hergestellt werden.

In einer vorteilhaften Ausführungsform weist das Kunststoffrohr eine Rohrwandung auf, welche einen Rohrinnenraum begrenzt, wobei die Rohrwandung eine dem Rohrinnenraum zugewandte Wandungsinnenseite und eine dem Rohrinnenraum abgewandte Wandungsaußenseite aufweist, und wobei das Kunststoffgitter mit der Wandungsaußenseite der Rohrwandung untrennbar verbunden ist.

Dadurch wird der technische Vorteil erreicht, dass das an der Wandungsaußenseite angeordnete, das Kunststoffrohr umgebende Kunststoffgitter eine wirksame Stabilisierung des Kunststoffrohrs sicherstellt.

In einer vorteilhaften Ausführungsform weist das Kunststoffgitter einen ersten Gitterabschnitt auf, welcher an einer Oberseite des Kunststoffrohrs, insbesondere der Wandungsaußenseite, angeordnet ist, und/oder weist das Kunststoffgitter einen zweiten Gitterabschnitt auf, welcher an einer der Oberseite abgewandten Unterseite des Kunststoffrohrs, insbesondere der Wandungsaußenseite, angeordnet ist.

Dadurch wird der technische Vorteil erreicht, dass je nach Anforderungsprofil entweder die Oberseite oder die Unterseite, bzw. die Oberseite und die Unterseite wirksam durch den jeweiligen Gitterabschnitt des Kunststoffgitters stabilisiert werden kann.

In einer vorteilhaften Ausführungsform weist das Kunststoffrohr eine Rohroberschale und eine Rohrunterschale auf, welche untrennbar miteinander verbunden sind, wobei das Kunststoffgitter mit der Rohroberschale und/oder mit der Rohrunterschale untrennbar verbunden ist, wobei insbesondere zwischen der Rohroberschale und der Rohrunterschale ein Rohrflansch angeordnet ist, oder weist das Kunststoffrohr einen ersten Rohrabschnitt und einen zweiten Rohrabschnitt auf, welche miteinander durch einen Schweißbereich verbunden sind, welcher das Kunststoffrohr insbesondere entlang einer Querachse des Kunststoffrohrs umläuft, wobei das Kunststoffgitter mit dem ersten und/oder zweiten Rohrabschnitt untrennbar verbunden ist.

Dadurch wird der technische Vorteil erreicht, dass gemäß der ersten Variante die Rohrober- und Rohrunterschale die Ausbildung eines stabilen Kunststoffrohrs sicherstellen. Hierbei umläuft der Rohrflansch insbesondere das Kunststoffrohr entlang einer Längsachse des Kunststoffrohrs.

Gemäß der zweiten Variante wird der technische Vorteil erreicht, dass die durch den Schweißbereich miteinander verbundenen ersten und zweiten Rohrabschnitte die Ausbildung eines stabilen Kunststoffrohrs sicherstellen. Hierbei umläuft der zwischen dem ersten und zweiten Rohrabschnitt angeordnete Schweißbereich das Kunststoffrohr insbesondere entlang einer Querachse des Kunststoffrohrs.

In einer vorteilhaften Ausführungsform weist die Fluidleitung eine Mehrzahl von Seitenstreben auf, welche mit dem Kunststoffgitter, insbesondere mit dem ersten und/oder zweiten Gitterabschnitt, und dem Kunststoffrohr untrennbar verbunden sind, wobei sich die Seitenstreben insbesondere von dem Kunststoffgitter aus entlang einer Lateralseite des Kunststoffrohrs erstrecken, wobei die Lateralseite zwischen der Oberseite und der Unterseite des Kunststoffrohrs angeordnet ist.

Dadurch wird der technische Vorteil erreicht, dass die Seitenstege eine besonders wirksame Stabilisierung des Kunststoffrohrs und des Kunststoffgitters sicherstellen. Dadurch, dass sich die Seitenstreben insbesondere entlang der Lateralseite des Kunststoffrohrs erstrecken, wird eine wirksame Stabilisierung der Lateralseite durch die Seitenstege sichergestellt. Insbesondere erstrecken sich die Seitenstreben von dem Kunststoffgitter aus entlang einer Wandungsaußenseite des Kunststoffrohrs.

In einer vorteilhaften Ausführungsform weisen die Seitenstreben einen ersten Seitenstrebenabschnitt und/oder einen zweiten Seitenstrebenabschnitt auf, wobei sich der zweite Seitenstrebenabschnitt insbesondere winklig zu dem ersten Seitenstrebenabschnitt erstreckt, wobei insbesondere der erste Seitenstrebenabschnitt an einer Wandungsaußenseite des Kunststoffrohrs anliegt und wobei insbesondere der zweite Seitenstrebenabschnitt an einem Rohrflansch des Kunststoffrohrs anliegt.

Dadurch wird der technische Vorteil erreicht, dass der an der Wandungsaußenseite des Kunststoffrohrs anliegende erste Seitenstrebenabschnitt eine wirksame stabilisierende Verbindung zwischen dem Seitenstreben und dem Kunststoffrohr sicherstellt. Durch den sich winklig zu dem ersten Seitenstrebenabschnitt erstreckenden und an dem Rohrflansch anliegenden zweiten Seitenstrebenabschnitt wird eine wirksame Abstützung des Seitenstrebens an dem Rohrflansch ermöglicht.

In einer vorteilhaften Ausführungsform weist das Kunststoffgitter eine Mehrzahl von Gitterstreben auf, welche insbesondere bereichsweise unterschiedliche Festigkeiten und/oder unterschiedliche Strebendicken aufweisen.

Dadurch wird der technische Vorteil erreicht, dass die Gitterstreben eine wirksame Struktur des Kunststoffgitters sicherstellen. Durch die unterschiedlichen Festigkeiten und/oder unterschiedlichen Strebendicken der Gitterstreben wird sichergestellt, dass die Gitterstreben spezifisch an die zu stabilisierenden Bereiche des Kunststoffrohrs angepasst werden können.

In einer vorteilhaften Ausführungsform umfassen die Gitterstreben eine Mehrzahl von sich entlang einer Längsachse des Kunststoffrohrs erstreckenden Längsstreben, und/oder eine Mehrzahl von sich entlang einer Querachse des Kunststoffrohrs erstreckenden Querstreben, und/oder eine Mehrzahl von sich diagonal zu einer Längsachse und einer Querachse des Kunststoffrohrs erstreckenden Diagonalstreben, wobei sich die Mehrzahl von Längsstreben, Querstreben und/oder Diagonalstreben insbesondere gegenseitig kreuzen.

Dadurch wird der technische Vorteil erreicht, dass die Längsstreben, Querstreben und/oder Diagonalstreben eine besonders stabilisierende Struktur des Kunststoffgitters sicherstellen.

In einer vorteilhaften Ausführungsform weist das Kunststoffgitter, insbesondere der erste und zweite Gitterabschnitt, erste Einfassungen und zweite Einfassungen auf, welche durch die Gitterstreben, insbesondere Längsstreben, Querstreben und/oder Diagonalstreben, begrenzt sind, und wobei insbesondere die Diagonalstreben, die zweiten Einfassungen durchlaufen.

Dadurch wird der technische Vorteil erreicht, dass die ersten und zweiten Einfassungen eine besonders wirksam stabilisierende Struktur des Kunststoffgitters sichergestellt wird. Insbesondere werden die ersten Einfassungen durch die Längsstreben, Querstreben und Diagonalstreben begrenzt, wobei die Diagonalstreben die ersten Einfassungen nicht durchlaufen. Insbesondere werden die zweiten Einfassungen durch die Längsstreben und Querstreben begrenzt, wobei die Diagonalstreben die zweiten Einfassungen durchlaufen. Insbesondere sind die ersten und zweiten Einfassungen des Kunststoffgitters jeweils abwechselnd nebeneinander angeordnet. Insbesondere bilden die ersten und zweiten Einfassungen des Kunststoffgitters ein Schachbrett-artiges Muster.

In einer vorteilhaften Ausführungsform weist das Kunststoffrohr einen ersten Öffnungsstutzen und einen den ersten Öffnungsstutzen abgewandten zweiten Öffnungsstutzen auf, wobei sich der erste und/oder zweite Öffnungsstutzen insbesondere winklig zu einer Längsachse des Kunststoffrohrs erstreckt.

Dadurch wird der technische Vorteil erreicht, dass durch die beiden Öffnungsstutzen Fluid wirksam in das Kunststoffrohr ein-, bzw. ausgeleitet werden kann. Durch die winklige Anordnung der Öffnungsstutzen kann eine gebogene Form der Fluidleitung sichergestellt werden.

In einer vorteilhaften Ausführungsform ist das Kunststoffrohr als ein gegenüber einer Längsachse des Kunststoffrohrs gebogenes Kunststoffrohr ausgebildet.

Dadurch wird beispielsweise der technische Vorteil erreicht, dass durch die gebogene Form des Kunststoffrohrs eine wirksame Anpassung an den Bauraum des Fahrzeugs sichergestellt wird.

Ausführungsbeispiele der Erfindung sind in den Zeichnungen dargestellt und werden im Folgenden näher beschrieben.

Es zeigen:
- Fig. 1: eine perspektivische Ansicht einer Fluidleitung gemäß einer ersten Ausführungsform;
- Fig. 2: eine perspektivische Ansicht der Fluidleitung gemäß der in Fig. 1 dargestellten ersten Ausführungsform; und
- Fig. 3: eine perspektivische Ansicht einer Fluidleitung gemäß einer zweiten Ausführungsform.

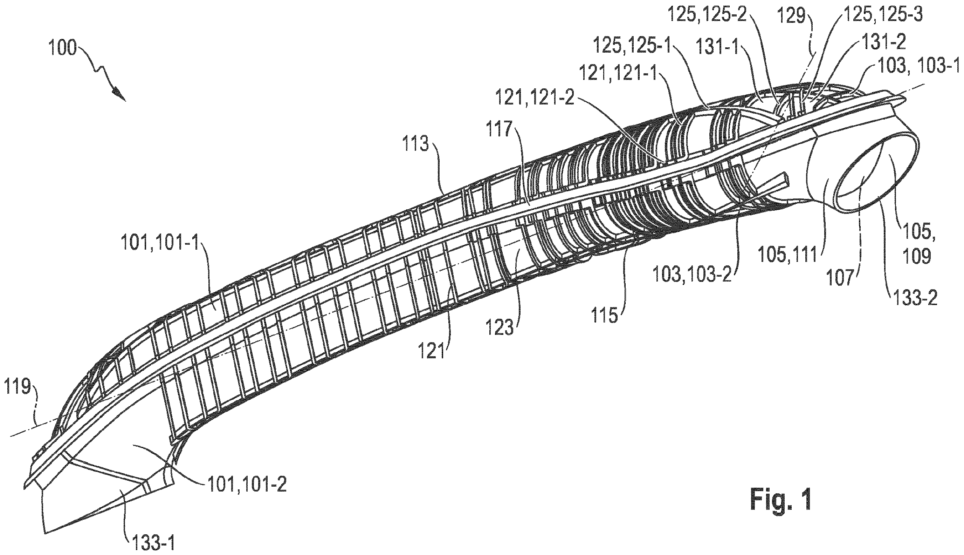

Fig. 1 zeigt eine perspektivische Ansicht einer Fluidleitung 100 gemäß einer ersten Ausführungsform. Der Fluidleitung 100 umfasst insbesondere eine Fluidleitung 100 für Fahrzeuge, insbesondere für Kraftfahrzeuge mit einem Verbrennungsmotor.

Kraftfahrzeuge mit Verbrennungsmotoren weisen Fluidleitungen 100 auf, welche insbesondere eine Ladeluftleitung umfassen, welche ausgebildet ist Ladeluft dem Verbrennungsmotor zuzuführen.

Die durch eine Ladeluftleitung geleitete Ladeluft kann neben der Ladeluft auch noch Verunreinigungen, wie z.B. Motoröl, Kraftstoffdämpfe, Kraftstoffkondensate, Abgase, Blowby-Gase und/oder Säuren, umfassen. Aus diesem Grund müssen Fluidleitungen 100 zur Leitung von Ladeluft eine ausreichende chemische Beständigkeit gegenüber dem geleiteten Fluid aufweisen. Um den mit hohen Temperaturen und hohen Druck geleiteten Fluiden widerstehen zu können, müssen die entsprechenden Fluidleitungen 100 auch eine ausreichende mechanische Beständigkeit aufweisen.

Insbesondere ist die Fluidleitung 100 gemäß der vorliegenden Offenbarung ausgebildet Fluid in einem Temperaturbereich zwischen 80°C und 250°C und/oder Fluid in einem Druckbereich zwischen 1 bar und 5 bar zu leiten.

Die Fluidleitung 100 gemäß der vorliegenden Offenbarung weist ein Kunststoffrohr 101 zum Leiten eines Fluids auf.

Bei herkömmlichen Kunststoffrohren treten während des Betriebs oftmals nachteilige Resonanzschwingungen auf. Um derartige Resonanzschwingungen in der Fluidleitung 100 gemäß der vorliegenden Offenbarung zu dämpfen, weist die Fluidleitung 100 ein Kunststoffgitter 103 auf, das das Kunststoffrohr 101 umgibt, wobei das Kunststoffrohr 101 und das Kunststoffgitter 103 untrennbar verbunden sind.

Durch das Kunststoffgitter 103 werden relevante Bereiche des Kunststoffrohrs 101 in denen Resonanzschwingungen auftreten können derartig versteift, dass die Resonanzschwingungen wirksam gedämpft werden können.

Durch das untrennbar mit dem Kunststoffrohr 101 verbundene Kunststoffgitter 103 kann zudem die Rohrdicke des Kunststoffrohrs 101 wirksam reduziert werden, ohne dass eine nachteilige Stabilität der Fluidleitung 100 auftritt. Insbesondere beträgt die Rohrdicke des Kunststoffrohrs 101 gemäß der vorliegenden Offenbarung weniger als 2,5 mm, insbesondere weniger als 2,0 mm, insbesondere weniger als 1,5 mm.

Somit ermöglicht die Fluidleitung 100 gemäß der vorliegenden Offenbarung einen wirksamen Ersatz von herkömmlich verwendeten Metallrohren für das Leiten von Fluid, insbesondere für das Leiten von Ladeluft.

Insbesondere ist das Kunststoffgitter 103 und das Kunststoffrohr 101 einstückig, insbesondere als ein Spritzgussbauteil ausgebildet, oder das Kunststoffgitter 103 ist mit dem Kunststoffgitter 103 stoffschlüssig verbunden, insbesondere verschweißt.

Insbesondere weist das Kunststoffrohr 101 eine Rohrwandung 105 auf, welche einen Rohrinnenraum 107 begrenzt, wobei die Rohrwandung 105 eine dem Rohrinnenraum 107 zugewandte Wandungsinnenseite 109 und eine dem Rohrinnenraum 107 abgewandte Wandungsaußenseite 111 aufweist, und wobei das Kunststoffgitter 103 mit der Wandungsaußenseite 111 der Rohrwandung 105 untrennbar verbunden ist.

Insbesondere weist das Kunststoffgitter 103 einen ersten Gitterabschnitt 103-1 auf, welcher an einer Oberseite 113 des Kunststoffrohrs 101, insbesondere der Wandungsaußenseite 111 angeordnet ist, und weist das Kunststoffgitter 103 insbesondere einen zweiten Gitterabschnitt 103-2 auf, welcher an einer der Oberseite 113 abgewandten Unterseite 115 des Kunststoffrohrs 101, insbesondere der Wandungsaußenseite 111, angeordnet ist.

Insbesondere weist das Kunststoffrohr 101 eine Rohroberschale 101-1 und eine Rohrunterschale 101-2 auf, welche untrennbar miteinander verbunden sind, wobei insbesondere zwischen der Rohroberschale 101-1 und der Rohrunterschale 101-2 ein Rohrflansch 117 angeordnet ist, und wobei das Kunststoffgitter 103 mit der Rohroberschale 101-1 und/oder mit der Rohrunterschale 101-2 untrennbar verbunden ist. Insbesondere ist der erste Gitterabschnitt 103-1 mit der Rohroberschale 101-1 untrennbar verbunden und ist der zweite Gitterabschnitt 103-2 mit der Rohrunterschale 101-2 untrennbar verbunden.

Hierbei umläuft der Rohrflansch 117 insbesondere das Kunststoffrohr 101 entlang einer Längsachse 119 des Kunststoffrohrs 101.

Insbesondere weist die Fluidleitung 100 eine Mehrzahl von Seitenstreben 121 auf, welche mit dem Kunststoffgitter 103, insbesondere mit dem ersten und/oder zweiten Gitterabschnitt 103-1, 103-2, und dem Kunststoffrohr 101 untrennbar verbunden sind, wobei sich die Seitenstreben 121 insbesondere von dem Kunststoffgitter 103 aus entlang einer Lateralseite 123 des Kunststoffrohrs 101 erstrecken, wobei die Lateralseite 123 zwischen der Oberseite 113 und der Unterseite 115 des Kunststoffrohrs 101 angeordnet ist. Insbesondere erstrecken sich die Seitenstreben 121 von dem Kunststoffgitter 103 aus entlang der Wandungsaußenseite 111.

Insbesondere weisen die Seitenstreben 121 einen ersten Seitenstrebenabschnitt 121-1 und einen zweiten Seitenstrebenabschnitt 121-2 auf, wobei sich der zweite Seitenstrebenabschnitt 121-2 winklig zu dem ersten Seitenstrebenabschnitt 121-1 erstreckt, wobei insbesondere der erste Seitenstrebenabschnitt 121-1 an einer Wandungsaußenseite 111 des Kunststoffrohrs 101 anliegt und wobei insbesondere der zweite Seitenstrebenabschnitt 121-2 an einem Rohrflansch 117 des Kunststoffrohrs 101 anliegt.

Somit stellen die Seitenstreben 121 eine wirksame Stabilisierung des Kunststoffrohrs 101 sicher.

Insbesondere weist das Kunststoffgitter 103 eine Mehrzahl von Gitterstreben 125 auf, welche bereichsweise unterschiedliche Festigkeiten und/oder unterschiedliche Strebendicken 127 aufweisen, wobei die Strebendicken 127 in Fig. 1 nicht dargestellt sind.

Das Kunststoffgitter 103, insbesondere der erste und oder zweite Gitterabschnitt 103-1, 103-2, weist insbesondere eine Mehrzahl von sich entlang einer Längsachse 119 des Kunststoffrohrs 101 erstreckenden Längsstreben 125-1, und/oder eine Mehrzahl von sich entlang einer Querachse 129 des Kunststoffrohrs 101 erstreckenden Querstreben 125-2, und eine Mehrzahl von sich diagonal zu einer Längsachse 119 und Querachse 129 des Kunststoffrohrs 101 erstreckenden Diagonalstreben 125-3 auf, wobei sich die Mehrzahl an Längsstreben 125-1, Querstreben 125-2 und/oder Diagonalstreben 125-3 insbesondere gegenseitig kreuzen.

Insbesondere weist das Kunststoffgitter 103, insbesondere der erste und zweite Gitterabschnitt 103-1, 103-2, erste Einfassungen 131-1 und zweite Einfassungen 131-2 auf. Die ersten Einfassungen 131-1 sind durch die Gitterstreben 125, insbesondere Längsstreben 125-1, Querstreben 125-2 und/oder Diagonalstreben 125-3, begrenzt. Die Gitterstreben 125, insbesondere Diagonalstreben 125-3, durchlaufen die zweiten Einfassungen 131-2.

Insbesondere werden die ersten Einfassungen 131-1 durch die Längsstreben 125-1, Querstreben 125-2 und Diagonalstreben 125-3 begrenzt, wobei die Diagonalstreben 125-3 die ersten Einfassungen 131-1 nicht durchlaufen. Insbesondere werden die zweiten Einfassungen 131-2 durch die Längsstreben 125-1 und Querstreben 125-2 begrenzt, wobei die Diagonalstreben 125-3 die zweiten Einfassungen 131-2 durchlaufen. Insbesondere sind die ersten und zweiten Einfassungen 131-1, 131-2 des Kunststoffgitters 103 jeweils abwechselnd nebeneinander angeordnet. Insbesondere bilden die ersten und zweiten Einfassungen 131-1, 131-2 des Kunststoffgitters 103 ein Schachbrett-artiges Muster.

Das Kunststoffrohr 101 ist insbesondere als ein gegenüber einer Längsachse 119 des Kunststoffrohrs 101 gebogenes Kunststoffrohr 101 ausgebildet. Das Kunststoffrohr 101 weist insbesondere einen ersten Öffnungsstutzen 133-1 und einen dem ersten Öffnungsstutzen 133-1 abgewandten zweiten Öffnungsstutzen 133-2 auf, wobei sich der erste und/oder zweite Öffnungsstutzen 133-1, 133-2 insbesondere winklig zu der Längsachse 119 des Kunststoffrohrs 101 erstreckt. Durch die beiden Öffnungsstutzen 133-1, 133-2 kann Fluid wirksam in das Kunststoffrohr 101 ein-, bzw. ausgeleitet werden kann.

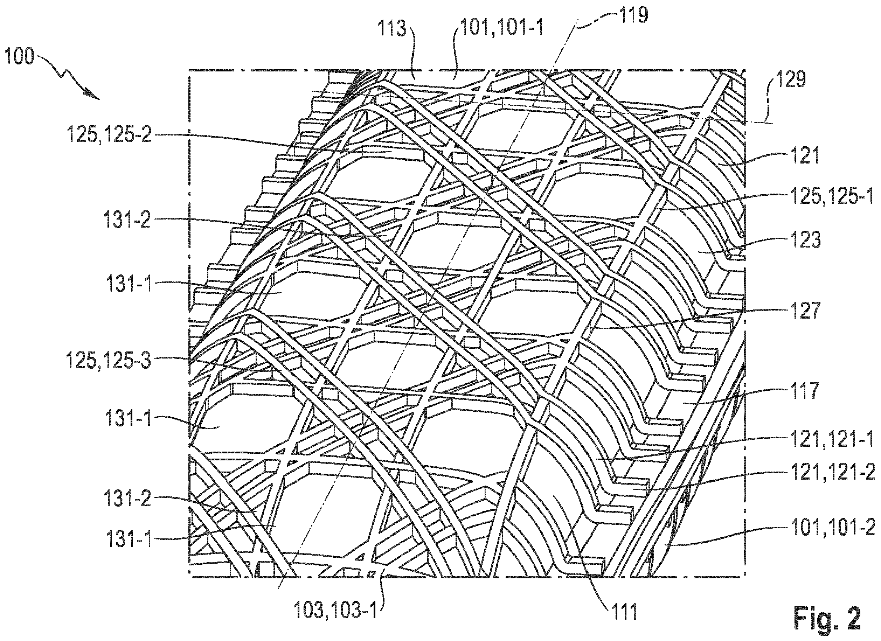

Fig. 2 zeigt eine perspektivische Ansicht der Fluidleitung gemäß der in Fig. 1 dargestellten ersten Ausführungsform.

In der in Fig. 2 dargestellten Ansicht der Fluidleitung 100 ist die Oberseite 113 des Kunststoffrohrs 101, insbesondere die Oberseite 113 der Rohroberschale 101-1 des Kunststoffrohrs 101 gezeigt. Die Rohrunterschale 101-2 des Kunststoffrohrs 101 ist in der Fig. 2 nur abschnittsweise gezeigt.

Zwischen der Rohroberschale 101-1 und der Rohrunterschale 101-2 ist ein Rohrflansch 117 angeordnet, welcher insbesondere das Kunststoffrohr 101 entlang einer Längsachse 119 des Kunststoffrohrs 101 zumindest abschnittsweise umläuft.

Die Fluidleitung 100 weist ferner ein Kunststoffgitter 103 auf, welches mit dem Kunststoffrohr 101 untrennbar verbunden ist. In der Fig. 2 ist ein an der Oberseite 113 des Kunststoffrohrs 101 angeordneter erster Gitterabschnitt 103-1 des Kunststoffgitters 103 dargestellt.

Die Fluidleitung 100 weist eine Mehrzahl von Seitenstreben 121 auf, welche mit dem Kunststoffgitter 103, insbesondere mit dem in Fig. 2 gezeigten ersten Gitterabschnitt 103-1, und dem Kunststoffrohr 101 untrennbar verbunden sind. Die Seitenstreben 121 erstrecken sich insbesondere von dem Kunststoffgitter 103 aus entlang einer Lateralseite 123 des Kunststoffrohrs 101, wobei die Lateralseite 123 zwischen der Oberseite 113 und der Unterseite 115 des Kunststoffrohrs 101 angeordnet ist.

Die Seitenstreben 121 weisen einen ersten Seitenstrebenabschnitt 121-1 und einen zweiten Seitenstrebenabschnitt 121-2 auf, wobei sich der zweite Seitenstrebenabschnitt 121-2 winklig zu dem ersten Seitenstrebenabschnitt 121-1 erstreckt. Der erste Seitenstrebenabschnitt 121-1 liegt hierbei insbesondere an einer Wandungsaußenseite 111 des Kunststoffrohrs 101 an. Der zweite Seitenstrebenabschnitt 121-2 liegt insbesondere an dem Rohrflansch 117 des Kunststoffrohrs 101 an. Somit kann durch die Seitenstreben 121 eine wirksame Stabilisierung an der Lateralseite 123 des Kunststoffrohrs 101 sichergestellt werden.

Das an der Oberseite 113 des Kunststoffrohrs 101 angeordnete Kunststoffgitter 103 weist eine Mehrzahl von Gitterstreben 125 auf, welche insbesondere bereichsweise unterschiedliche Festigkeiten und/oder unterschiedliche Strebendicken 127 aufweisen. Eine Strebendicke 127 einer Gitterstrebe 125 ist in der Fig. 2 exemplarisch dargestellt.

Die Gitterstreben 125 weisen insbesondere eine Mehrzahl von sich entlang der Längsachse 119 des Kunststoffrohrs 101 erstreckenden Längsstreben 125-1, und/oder eine Mehrzahl von sich entlang einer Querachse 129 des Kunststoffrohrs 101 erstreckenden Querstreben 125-2, und/oder eine Mehrzahl von sich diagonal zu einer Längsachse 119 und Querachse 129 des Kunststoffrohrs 101 erstreckenden Diagonalstreben 125-3 auf, wobei sich die Mehrzahl an Längsstreben 125-1, Querstreben 125-2 und/oder Diagonalstreben 125-3 insbesondere gegenseitig kreuzen.

Das Kunststoffgitter 103, insbesondere der erste Gitterabschnitt 103-1, weist erste Einfassungen 131-1 und zweite Einfassungen 131-2 auf. Die ersten Einfassungen 131-1 sind durch die Gitterstreben 125, insbesondere Längsstreben 125-1, Querstreben 125-2 und Diagonalstreben 125-3, begrenzt. Die zweiten Einfassungen 131-2 sind durch die Gitterstreben 125, insbesondere Längsstreben 125-1 und Querstreben 125-2 begrenzt, wobei die Diagonalstreben 125-3 die zweiten Einfassungen 131-2 durchlaufen.

Insbesondere sind die ersten und zweiten Einfassungen 131-1, 131-2 des Kunststoffgitters 103 jeweils abwechselnd nebeneinander angeordnet. Insbesondere bilden die ersten und zweiten Einfassungen 131-1, 131-2 des Kunststoffgitters 103 ein Schachbrettmuster.

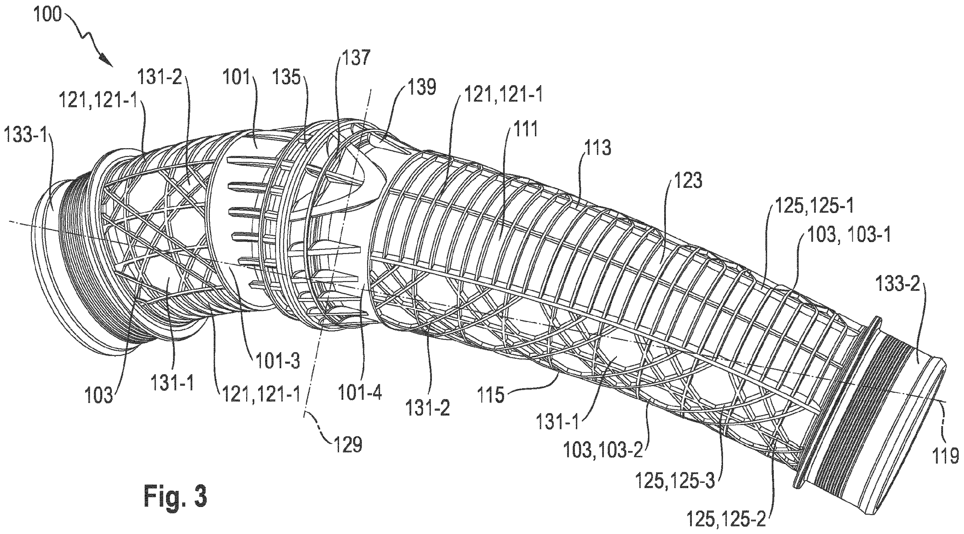

Fig. 3 zeigt eine perspektivische Ansicht der Fluidleitung gemäß einer zweiten Ausführungsform.

Die in der Fig. 3 gezeigte zweite Ausführungsform umfasst eine Fluidleitung 100 mit einem Kunststoffrohr 101 und einem Kunststoffgitter 103, welches untrennbar mit dem Kunststoffrohr 101 verbunden ist.

Das Kunststoffgitter 103 umfasst einen ersten Gitterabschnitt 103-1, welcher an einer Oberseite 113 des Kunststoffrohrs 101 angeordnet ist, und umfasst einen zweiten Gitterabschnitt 103-2, welcher an einer Unterseite 115 des Kunststoffrohrs 101 angeordnet ist.

Die Fluidleitung 100 weist ferner Seitenstreben 121 auf, welche mit dem Kunststoffrohr 101 und dem Kunststoffgitter 103 untrennbar verbunden sind. Im Unterschied zu der in Fig. 1 und Fig. 2 dargestellten ersten Ausführungsform weisen die in der Fig. 3 dargestellten Seitenstreben 121 nur einen an der Wandungsaußenseite 111 des Kunststoffrohrs 101 anliegenden ersten Seitenstrebenabschnitt 121-1 auf. Die in der Fig. 3 dargestellten Seitenstreben 121 weisen keinen zweiten Seitenstrebenabschnitt 121-2 auf, da das Kunststoffrohr 101 keinen Rohrflansch 117 aufweist, an welchem die Seitenstreben 121 anliegen.

Die in der Fig. 3 dargestellten Seitenstreben 121 erstrecken sich entlang der Wandungsaußenseite 111 des Kunststoffrohrs 101 von dem ersten Gitterabschnitt 103-1 entlang der Lateralseite 123 zu dem zweiten Gitterabschnitt 103-2.

Ebenso wie das in der Fig. 1 und der Fig. 2 dargestellte Kunststoffgitter 103 weist auch das in der Fig. 3 dargestellte Kunststoffgitter 103 sich entlang einer Längsachse 119 erstreckende Längsstreben 125-1, sich entlang einer Querachse 129 des Kunststoffrohrs 101 erstreckenden Querstreben 125-2, und sich diagonal zu der Längsachse 119 und der Querachse 129 erstreckenden Diagonalstreben 125-3 auf.

Das Kunststoffgitter 103, insbesondere der erste und zweite Gitterabschnitt 103-1, 103-2 weist erste Einfassungen 131-1 und zweite Einfassungen 131-2 auf. Die ersten Einfassungen 131-1 sind durch die Gitterstreben 125, insbesondere Längsstreben 125-1, Querstreben 125-2 und/oder Diagonalstreben 125-3, begrenzt. Die zweiten Einfassungen 131-2 sind durch die Gitterstreben 125, insbesondere Längsstreben 125-1 und Querstreben 125-2 begrenzt, wobei die Diagonalstreben 125-3 die zweiten Einfassungen 131-2 durchlaufen.

Die in der Fig. 3 dargestellte Fluidleitung 100 gemäß der ersten Ausführungsform unterscheidet sich von der in den Figuren 1 und 2 dargestellten Fluidleitung 100 gemäß der zweiten Ausführungsform dadurch, dass das Kunststoffrohr 101 einen ersten Rohrabschnitt 101-3 und einen zweiten Rohrabschnitt 101-4 aufweist, welche miteinander durch einen Schweißbereich 135 verbunden sind.

Der Schweißbereich 135 umläuft das Kunststoffrohr 101, insbesondere entlang einer Querachse 129, des Kunststoffrohrs 101. Das Kunststoffgitter 103 ist mit dem ersten und/oder zweiten Rohrabschnitt 101-3, 101-4 untrennbar verbunden.

Der Schweißbereich 135 umfasst insbesondere eine Mehrzahl von das Kunststoffrohr 101 insbesondere entlang der Querachse 129 umlaufenden Stabilisierungsrippen 137. Die Stabilisierungsrippen 137 werden insbesondere durch sich entlang der Längsachse 119 erstreckende Längsrippen 139 stabilisiert.

Das Kunststoffrohr 101, insbesondere der erste und zweite Rohrabschnitt 101-3, 101-4 ist insbesondere als ein gegenüber einer Längsachse 119 des Kunststoffrohrs 101 gebogenes Kunststoffrohr 101 ausgebildet. Das Kunststoffrohr 101, insbesondere der erste Rohrabschnitt 101-3 weist insbesondere einen ersten Öffnungsstutzen 133-1 auf. Das Kunststoffrohr 101, insbesondere der zweite Rohrabschnitt 101-4 weist einen dem ersten Öffnungsstutzen 133-1 abgewandten zweiten Öffnungsstutzen 133-2 auf. In der in Fig. 3 dargestellten Ausführungsform weist der erste und/oder zweite Öffnungsstutzen 133-1, 133-2 insbesondere einen Schlauchstutzen auf.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidleitung
- 101: Kunststoffrohr
- 101-1: Rohroberschale
- 101-2: Rohrunterschale
- 101-3: Erster Rohrabschnitt
- 101-4: Zweiter Rohrabschnitt
- 103: Kunststoffgitter
- 103-1: Erster Gitterabschnitt
- 103-2: Zweiter Gitterabschnitt
- 105: Rohrwandung
- 107: Rohrinnenraum
- 109: Wandungsinnenseite
- 111: Wandungsaußenseite
- 113: Oberseite des Kunststoffrohrs
- 115: Unterseite des Kunststoffrohrs
- 117: Rohrflansch
- 119: Längsachse des Kunststoffrohrs
- 121: Seitenstreben
- 121-1: Erster Seitenstrebenabschnitt
- 121-2: Zweiter Seitenstrebenabschnitt
- 123: Lateralseite
- 125: Gitterstreben
- 125-1: Längsstreben
- 125-2: Querstreben
- 125-3: Diagonalstreben
- 127: Strebendicke
- 129: Querachse
- 131-1: Erste Einfassung
- 131-2: Zweite Einfassung
- 133-1: Erster Öffnungsstutzen
- 133-2: Zweiter Öffnungsstutzen
- 135: Schweißbereich
- 137: Stabilisierungsrippen
- 139: Längsrippen

## Patentansprüche

1. Fluidleitung (100) zum Leiten eines Fluids, mit:
einem Kunststoffrohr (101) zum Leiten des Fluids; und
einem Kunststoffgitter (103), das das Kunststoffrohr (101) umgibt und vorgesehen ist, eine Resonanzschwingung des Kunststoffrohrs (101) zu dämpfen;
**dadurch gekennzeichnet, dass**
das Kunststoffgitter (103) mit dem Kunststoffrohr (101) untrennbar verbunden ist.

2. Fluidleitung (100) nach Anspruch 1, wobei das Kunststoffgitter (103) und das Kunststoffrohr (101) einstückig, insbesondere als ein Spritzgussbauteil, ausgebildet sind, oder wobei das Kunststoffgitter (103) mit dem Kunststoffrohr (101) stoffschlüssig verbunden, insbesondere verschweißt, ist.

3. Fluidleitung (100) nach Anspruch 1 oder 2, wobei das Kunststoffrohr (101) eine Rohrwandung (105) aufweist, welche einen Rohrinnenraum (107) begrenzt, wobei die Rohrwandung (105) eine dem Rohrinnenraum (107) zugewandte Wandungsinnenseite (109) und eine dem Rohrinnenraum (107) abgewandte Wandungsaußenseite (111) aufweist, und wobei das Kunststoffgitter (103) mit der Wandungsaußenseite (111) der Rohrwandung (105) untrennbar verbunden ist.

4. Fluidleitung (100) nach einem der vorangehenden Ansprüche, wobei das Kunststoffgitter (103) einen ersten Gitterabschnitt (103-1) aufweist, welcher an einer Oberseite (113) des Kunststoffrohrs (101), insbesondere der Wandungsaußenseite (111), angeordnet ist, und/oder wobei das Kunststoffgitter (103) einen zweiten Gitterabschnitt (103-2) aufweist, welcher an einer der Oberseite (113) abgewandten Unterseite (115) des Kunststoffrohrs (101), insbesondere der Wandungsaußenseite (111) angeordnet ist.

5. Fluidleitung (100) nach einem der vorangehenden Ansprüche, wobei das Kunststoffrohr (101) eine Rohroberschale (101-1) und eine Rohrunterschale (101-2) aufweist, welche untrennbar miteinander verbunden sind, wobei das Kunststoffgitter (103) mit der Rohroberschale (101-1) und/oder mit der Rohrunterschale (101-2) untrennbar verbunden ist, wobei insbesondere zwischen der Rohroberschale (101-1) und der Rohrunterschale (101-2) ein Rohrflansch (117) angeordnet ist, oder wobei das Kunststoffrohr (101) einen ersten Rohrabschnitt (101-3) und einen zweiten Rohrabschnitt (101-4) aufweist, welche miteinander durch einen Schweißbereich (135) verbunden sind, welcher das Kunststoffrohr (101) insbesondere entlang einer Querachse (129) des Kunststoffrohrs (101) umläuft, wobei das Kunststoffgitter (103) mit dem ersten und/oder zweiten Rohrabschnitt (101-3, 101-4) untrennbar verbunden ist.

6. Fluidleitung (100) nach einem der vorangehenden Ansprüche, wobei die Fluidleitung (100) eine Mehrzahl von Seitenstreben (121) aufweist, welche mit dem Kunststoffgitter (103), insbesondere mit dem ersten und/oder zweiten Gitterabschnitt (103-1, 103-2), und dem Kunststoffrohr (101) untrennbar verbunden sind, wobei sich die Seitenstreben (121) insbesondere von dem Kunststoffgitter (103) aus entlang einer Lateralseite (123) des Kunststoffrohrs (101) erstrecken, wobei die Lateralseite (123) zwischen der Oberseite (113) und der Unterseite (115) des Kunststoffrohrs (101) angeordnet ist.

7. Fluidleitung (100) nach Anspruch 6, wobei die Seitenstreben (121) einen ersten Seitenstrebenabschnitt (121-1) und/oder einen zweiten Seitenstrebenabschnitt (121-2) aufweisen, wobei sich der zweite Seitenstrebenabschnitt (121-2) insbesondere winklig zu dem ersten Seitenstrebenabschnitt (121-1) erstreckt, wobei insbesondere der erste Seitenstrebenabschnitt (121-1) an einer Wandungsaußenseite (111) des Kunststoffrohrs (101) anliegt und wobei insbesondere der zweite Seitenstrebenabschnitt (121-2) an einem Rohrflansch (117) des Kunststoffrohrs (101) anliegt.

8. Fluidleitung (100) nach einem der vorangehenden Ansprüche, wobei das Kunststoffgitter (103) eine Mehrzahl von Gitterstreben (125) aufweist, welche insbesondere bereichsweise unterschiedliche Festigkeiten und/oder unterschiedliche Strebendicken (127) aufweisen.

9. Fluidleitung (100) nach Anspruch 8, wobei Gitterstreben (125) eine Mehrzahl von sich entlang einer Längsachse (119) des Kunststoffrohrs (101) erstreckenden Längsstreben (125-1), und/oder eine Mehrzahl von sich entlang einer Querachse (129) des Kunststoffrohrs (101) erstreckenden Querstreben (125-2), und/oder eine Mehrzahl von sich diagonal zu einer Längsachse (119) und Querachse (129) des Kunststoffrohrs (101) erstreckenden Diagonalstreben (125-3) umfassen, wobei sich die Mehrzahl von Längsstreben (125-1), Querstreben (125-2) und/oder Diagonalstreben (125-3) insbesondere gegenseitig kreuzen.

10. Fluidleitung (100) nach Anspruch 8 oder 9, wobei das Kunststoffgitter (103), insbesondere der erste und zweite Gitterabschnitt (103-1,103-2), erste Einfassungen (131-1) und zweite Einfassungen (131-2) aufweist, welche durch die Gitterstreben (125), insbesondere Längsstreben (125-1), Querstreben (125-2) und/oder Diagonalstreben (125-3), begrenzt sind, und wobei insbesondere die Diagonalstreben (125-3) die zweiten Einfassungen (131-2) durchlaufen.
